# EUROPEAN PATENT APPLICATION

(11) **EP 1 251 678 A2**
(43) Date of publication of application: **23.10.2002**
(21) Application number: 02005195.9
(22) Date of filing: 08.03.2002
(51) Int. Cl.: H04M 1/725

(54) **Mobile communication device**

(30) Priority: 19.04.2001 GB 0109615
(71) Applicant: Datalines Communications Limited, Bletchley, Milton Keynes MK3 6RT (GB)
(72) Inventor: Lagesse, Peter Henri, Bletchley, Milton Keynes MK3 6RT (GB)
(74) Representative: Raynor, Simon Mark

(57) **Abstract**

A device (10) is disclosed that combines mobile communications capability (for example, mobile telephony and WAP communication) with additional functionality. The device (10) has control means (24, 36 )by which the mobile communications capability can be disabled while maintaining operation of the other functionality. This enables the other functionality of the device to be used in situations in which use of mobile communications equipment is not permitted. The additional functionality may includes the following: a portable computing device such as a notebook computer, a hand-held computer, or personal digital assistant; or a telephony device having additional functionality, such as a contact database or a diary.

## Description

This invention relates to a mobile communication device. In particular, it relates to a mobile communications device that combines communication functions, such as telephony, with other functions that do not require a remote communications link.

Increasingly, mobile communication capability is being incorporated into devices that also. have other functions. For example, a hand-held computing device, such as a personal digital assistant (PDA) may be provided with cellular telephony capability for voice and data communication.

There is a belief held by some that, in some circumstances, mobile communications devices, and cellular telephony devices in particular, can adversely affect the performance of other electronic apparatus. Specifically, this arises because mobile communications devices emit electromagnetic radiation in the microwave band. This has led to use of such devices being prohibited in some places such as hospitals and aircraft. In the case of devices having a combined function, as discussed above, such prohibition would normally apply only to use of the mobile communications capability of the device, its other functions being less likely to cause any harmful effects. However, in order to ensure compliance with a ban on use of mobile communications devices, the use of these combined devices may be entirely prohibited, even if they can be used in an entirely harmless way.

An aim of this invention is to provide a device that incorporates mobile communications capability with other functions, which can legitimately be used in situations where use of mobile communication devices is prohibited.

This invention provides a device that combines mobile communications capability with other functionality, the device including control means by which the mobile communications capability can be disabled while maintaining operation of the other functionality.

In this way, upon operation of the control means, the device can be used with sure knowledge that its mobile communications capability will not inadvertently be activated, so ensuring that potentially harmful electromagnetic emissions will not take place. This also has the advantage that power consumption can be reduced and when communications capability is not required, thereby saving power and increasing battery life.

At its simplest, the control means may be a mechanical switch operable by a user. Such a switch could directly or indirectly (e.g. under software control) disable the mobile communications capability of the device.

Alternatively, the control mains may be implemented within a user interface of the device. For example, it may be implemented as a visual control in a graphical user interface. In embodiments of this type, control of the mobile communications capability is most typically implemented under software control.

Advantageously, a device embodying this invention further includes an indicator whereby operational condition of the control means can be determined. This enables a user, or other interested person, to determine the operational state of the mobile communications capability of the device. For example, the indicator may include an optical device such as a lamp or a light-emitting diode. Such an optical device is most advantageously placed to be clearly visible to a person observing the device.

A device embodying this invention may include one of the following: a portable computing device such as a notebook computer, a hand-held computer, or personal digital assistant; or a telephony device having additional functionality, such as a contact database or a diary. Naturally, embodiments of this invention are not limited to those listed above, and it is likely that further embodiments will be envisaged as mobile communications technology, and applications of it, develop.

An embodiment of the invention will now be described in detail, by way of example, and with reference to the accompanying drawings in which:
Figure 1 illustrates a device being a personal digital assistant, being a first embodiment of the a invention; and
Figure 2 is a block diagram of the device of Figure 1.

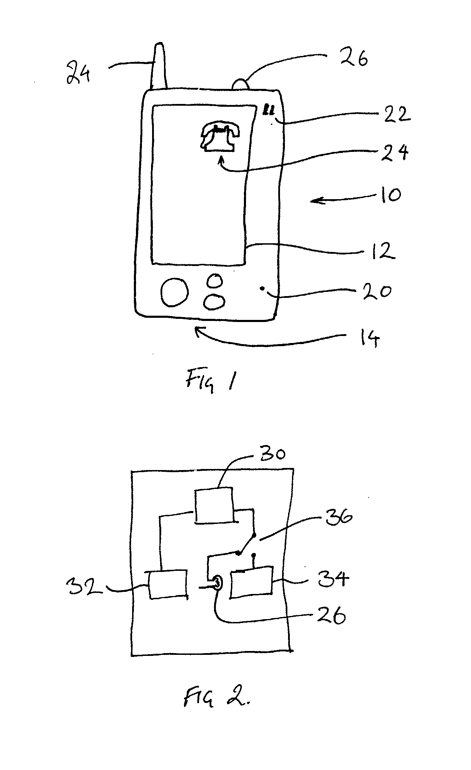

With reference first to Figure 1, a device embodying the invention is in the form of a personal digital assistant (PDA) 10. The PDA includes a touch screen 12 normally operated by a stylus (not shown) and other controls 14. In addition to having the functionality of a normal PDA, the device 10 also has mobile communications capability that allows it to operate as a mobile telephone and WAP browser. To this end, the device includes a microphone 20, an earpiece 22 and an antenna 24. Control of the device 10, when being used as a mobile communications device 10, is effected through interaction with a graphical user interface displayed on the touch screen 12.

Under normal circumstances, whenever the device 10 is switched on, its mobile communications capability is active in order that it can, amongst other functions, receive incoming telephone calls. This is the case even if a user has turned the device on with the primary intention of accessing data or performing another task which does not involve communication. As will be understood, this may be inconvenient if the user is in a situation in which use of mobile communications devices is prohibited.

Accordingly, the graphical user interface displayed on the touch-screen 12 includes an icon 24 that a user can activate in order to enable or disable communications capability within the device 10. The icon 24 is effectively a control means through which a user can send a signal to operating software of the device, the software responding to that signal by activating or deactivating communications capability.

In order to provide a clear visual indication of status of the device 10, there is provided a light-emitting diode 26 on an external casing of the device 10 where it is clearly visible. The light emitting diode 26 is illuminated under control of the software whenever the communications capability is deactivated. This can provide a visual indication to a person responsible for enforcing prohibition of use of mobile communications equipment that the device 10 is being used in an authorised manner.

A typical internal arrangement (clearly, highly simplified) of the device 10 is shown in Figure 2. The device includes a control module 30 a computation module 32 and a communications module 34. When the device 10 is operating normally, an internal switch 36 is closed to energise an enable line offthe communications module 34. However, when the device is used in situations in which its mobile communications capability must be deactivated, this switch 36 is opened by the control module 30. At the same time, power is supplied to the light-emitting diode 26. The state of the switch 36 does not affect the computation module 32, the purpose of which is to handle functions that do not require external communication.

In alternative embodiments of the invention, the icon 24 is replaced by a manual control such as a push-button. Operation of this by the user may have a direct effect on the switch 36 or may be detected by the control module 30, which will in turn operate the switch as required.

It is also possible that the light-emitting diode 26, in alternative embodiments, functions differently. For example, it may remain lit whenever there device is in operation, and change colour in order to indicate the status of the communications module 34.

## Claims

1. A device that combines mobile communications capability with other functionality, the device including control means by which the mobile communications capability can be disabled while maintaining operation of the other functionality.

2. A device according to claim 1 in which the control means is a mechanical switch operable by a user.

3. A device according to any preceding claim in which the control means is implemented within a user interface of the device.

4. A device according to claim 3 in which the control means is implemented as a visual control in a graphical user interface.

5. A device according to any preceding claim in which the switch disables the mobile communications capability of the device under software control.

6. A device according to any preceding claim further including an indicator whereby operational condition of the control means can be determined.

7. A device according to claim 6 in which the indicator includes an optical device.

8. A device according to claim 7 in which the optical device is a lamp or a light-emitting diode.

9. A device according to claim 7 or claim 8 in which the optical device is placed to be clearly visible to a person observing the device.

10. A device according to any preceding claim in which the functionality includes the following: a portable computing device such as a notebook computer, a hand-held computer, or personal digital assistant.

11. A device according to any preceding claim in which the mobile communications capability includes mobile telephony.

12. A device according to any preceding claim being a telephony device having additional functionality, such as a contact database or a diary.
